Europäisches Patentamt

European Patent Office

Office européen des brevets

(11) Publication number: **0 455 967 A1**

# EUROPEAN PATENT APPLICATION

(21) Application number: 91104425.3

(22) Date of filing: 21.03.91

(51) Int. Cl.5: **A23C 19/024**, A23C 19/02, A23C 19/05, A23C 19/06

(30) Priority: 02.04.90 US 502889

(43) Date of publication of application:
**13.11.91 Bulletin 91/46**

(84) Designated Contracting States:
**AT BE CH DE DK ES FR GB GR IT LI NL SE**

(71) Applicant: **Jeremiau, Yitzhaki**
**5 Chelnov Street**
**IL-75 234 Rishon LeZion(IL)**

(72) Inventor: **Jeremiau, Yitzhaki**
**5 Chelnov Street**
**IL-75 234 Rishon LeZion(IL)**

(74) Representative: **Modiano, Guido et al**
**MODIANO, JOSIF, PISANTY & STAUB**
**Modiano & Associati Baaderstrasse 3**
**W-8000 München 5(DE)**

(54) **Method and apparatus for making cottage cheese.**

(57) A method and apparatus for processing a hot mixture of cured curd and whey to produce cottage cheese in which the steps of separating the curd from the hot mixture, washing and cooling the separated curd, and applying cream and additives to the washed and cooled curd, are performed in a continuous operation.

FIG 1

EP 0 455 967 A1

The present invention relates to making cheese, and particularly to a method and apparatus for processing a hot mixture of cured curd and whey to produce cottage cheese.

Cottage cheese is a soft, white cheese made of strained and seasoned curds of skim milk. More particularly, it is a washed, cooked, low-acid curd coagulated by acids or lactic bacteria , with or without Rennet assistance, dressed with cream, (which term includes whole milk or skim milk), with or without additives such as salt, vegetables, fruits, spices or flavours.

The hot mixture of cured curd and whey is processed to produce cottage cheese at the present time by separating the curd from the hot mixture, washing and cooling the separated curd, and then applying cream to the washed and cooled curd. At the present time, these operations are generally performed in batches, in apparatus which includes a whey drainer in which the curd in pressed against a revolving drum to squeeze out the whey, a washer/cooler in which the curd is flushed with water, a curd drainer in which the curd is again squeezed to remove the flushing water, and a creamer in which the curd is mixed with cream, all interconnected by a conduit system through which the material is fed from one batch device to the next. Another process in use performs all the foregoing operations in the same vat.

The foregoing batch technique, however, is subject to a number of drawbacks, including the following : the squeezing of the curd and the use of pumps for transferring the curd from one batch device to the next causes considerable damage to the curd grains and significant curd loss in that the so-produced fine particals are lost with the whey and wash water; and moreover, the squeezing of the curd produces upon the release of the squeezing pressure, a suction which causes ambient air (possibly containing bacteria or other pollutants) to be drawn into the curd. Moreover, the batch technique is wasteful of water and energy; and further, it requires considerable time for producing the cottage cheese.

An object of the present invention is to provide a method and apparatus that may be used in the production of cottage cheese having advantages in one or all of the above respects.

The present invention is concerned not so much with the procedure for preparing the hot mixture of cured curd and whey, which may be done in a conventional manner and using conventional equipment, but rather with the method and apparatus for processing the hot mixture of cured curd and whey to produce the cottage cheese.

According to the present invention, there is provided a method of processing a hot mixture of cured curd and whey to produce cottage cheese in a continuous manner by the steps of separating the curd from the hot mixture, washing and colling the separated curd, and applying cream to the washed and cooled curd; characterized in that the curd, after having been separated from the hot mixture, is washed and cooled by: transferring the separated curd to the inlet end of a fine-mesh conveyor; and applying chilled water to the curd on the fine-mesh conveyor, which water drains therethrough while washing and cooling the curd as it moves along the fine-mesh conveyor from the inlet end to the outlet end thereof.

According to further features in the described preferred embodiment, the drained water is recycled to the fine-mesh conveyor a plurality of times in a counter-currant manner with respect to the direction of movement of the curd over the fine-mesh conveyor, such that the purest and coldest drained water is applied closer to the outlet end of the fine-mesh conveyor.

It will thus be seen that the foregoing features of the invention permit the method to be practiced in a single continuous operation, rather than in batch operations. The continuous operation thus effects a separation of the whey from the curd by gravity, thereby obviating the need for a squeezing actions which might damage the curd or produce fine grains which are lost with the wash water. Thus, the process according to the foregoing features produces less damage to the curd, a higher yield, and a better product, compared to the conventional batch-type process. Moreover, it is more sanitary since it avoids the need for squeezing the curd which may cause is to draw bacteria-laden air. Further, it enables achieving a significant saving in water , energy and manpower; and finally, it speeds-up the overall process very considerably, from hours as involved in the batch-type process to minutes when a continuous process in accordance with the present invention is used.

The invention also provides apparatus for producing cottage cheese in accordance with the above method.

Further features and advantages of the invention will be apparant from the description below.

The invention is herein described, somewhat schematically and by way of example only, with reference to the accompanying drawings, wherein:

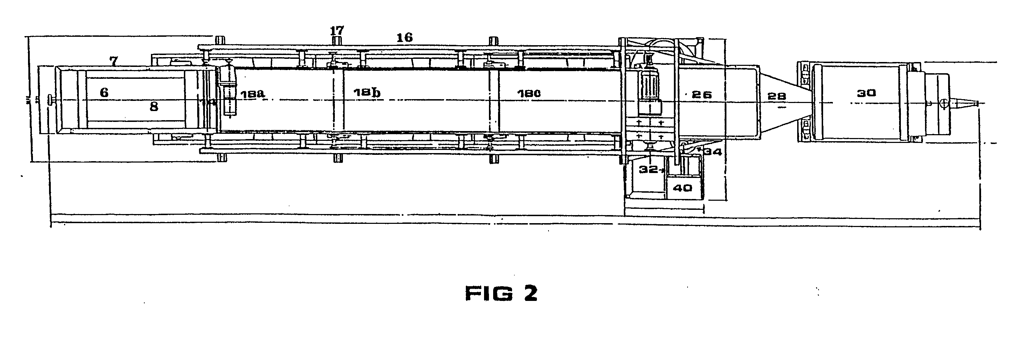

Figs. 1 and 2 are side and plan views, respectively of one form of apparatus for producing cottage cheese in accordance with the present invention; and

Fig. 3 is a flow diagram illustrating the operation of the apparatus of Figs. 1 and 2.

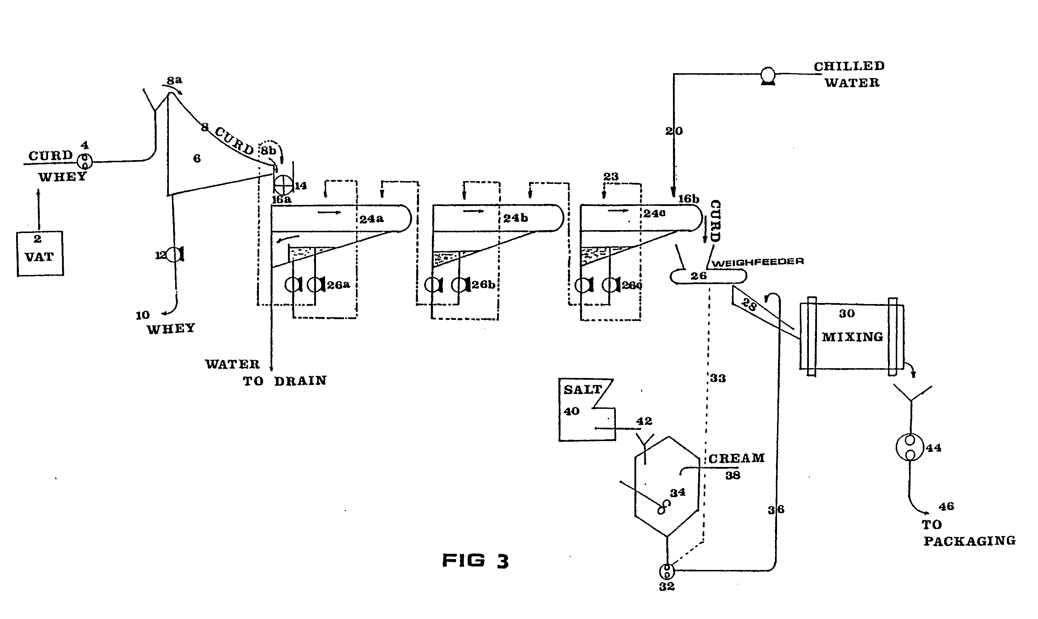

The process illustrated in the accompanying drawing begins with a vat, generally designated 2 (Fig. 3), in which a hot mixture of cured curd and whey is produced. The equipment for producing this hot mixture may be conventional equipment, and therefore details of the construction and operation of such equipment are not setforth herein. The invention of the present application begins primarily with the processing of the hot mixture of cured curd and whey in a continuous manner, rather than in a batch-wise manner, to produce the cottage cheese end product.

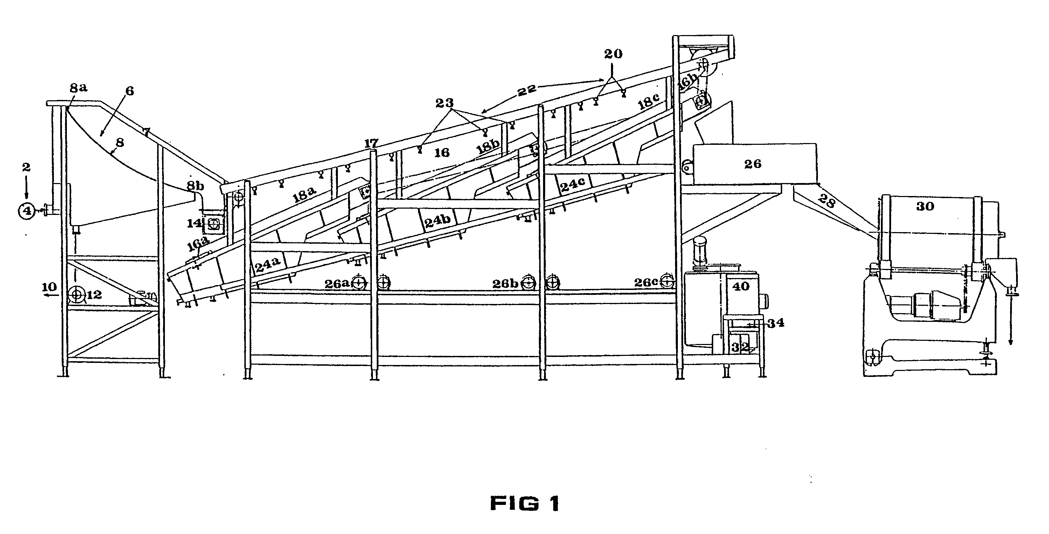

Thus, the hot mixture of cured curd and whey produced in vat 2 is pumped by a rotary pump 4 (Fig. 3) to the upper end of a vertically-extending strainer 6. Strainer 6 includes a framework 7 supporting a fine-mesh web 8 of flexible material, such as a stainless steel, having its inlet end 8a at a substantially higher elevation than its outlet end 8b. Thus, the hot mixture moves downwardly by gravity along the web while the whey passes through the web into a receptacle 10, from which it is discharged by a pump 12. During this passage of the mixture by gravity downwardly of web 8, the web assumes a parabolic curvature as illustrated in Figs 1 and 3.

The separated curd exiting from end 8b of the strainer web 8 is transferred by a rotary transfer member 14 to a fine-mesh conveyor, generally designated 16 supported on a framework 17. Conveyor 16 includes a plurality (three being shown for purposes of example) of individual inwardly-inclined, closed-loop conveyor belts 18a, 18b, 18c, e.g., of polypropylene, which move the hot, separated curd, from the inlet end 16a of the conveyor 16, namely the lower end 8a of the strainer 8, at a relatively low elevation underlying the outlet end 8b of the strainer, upwardly to the outlet end 16b of the conveyor, namely the upper end of belt 18c. As shown in Fig. 1, the outlet end of each belt overlies the inlet end of the next belt so as to continuously move the curd in the upward direction.

The illustrated apparatus further includes a source of chilled water 20 (Fig. 3) and a conduit 22 which directs the chilled water to the conveyor belts 18a-18c via spray nozzles 23. The chilled water washes and cools the curd as it moves along the conveyor belts 18a-18c and drains through the belts to receptacles 24a,24b, 24c underlying the belts.

Each of the closed-loop belts 18a-18c includes one or more pumps, as shown at 26a-26c for recycling the drained water collected in receptacles 24a-24c in a counter-current manner with respect to the direction of movement of the curd along the belts 18a-18c. Thus, as shown particularly in Fig. 3, the water drained from belt 18c and received in its receptacle 24c is partly pumped back to its respective belt 18c but upstream of its outlet end, and partly to the upstream belt 18b. Similarly, the water drained from belt 18b is partly pumped back to its belt upstream of its outlet end, and partly to the upstream belt 18a; and the water drained from belt 18a is partly pumped from upstream of its outlet end, and partly to the transfer device 14 receiving the hot curd from the strainer web 8.

It will thus be seen that the illustrated counter-current method of washing and cooling the curd as it continuously moves along the conveyor belts 18a-18c, causes the purest and coldest water to be applied closer to the oulet end 16b of the conveyor system, so that the purest and coldest curd is outletted from the conveyor system.

The so-washed and cooled curd outletted from the conveyor system 16 is transferred by gravity, via a scale 26 and a slide 28, to a mixing drum 30. The scale 26 continuously measures the weight of the curd leaving the conveyor system 16, and controls a pump 32, as schematically shown by the broken-line connection 33 in Fig. 3, in accordance with the measured weight of the curd, so that the pump continuously transfers from a cream pre-mixer 34 via a conduit 36, the necessary quantity of cream to maintain a preselected ratio by weight of curd and cream.

Pre-mixer 34 is a tank in which cream (which term includes whole milk or skim milk) is added via an inlet 38, and in which one or more other additives, (e.g. salt, vegetables, fruits, spices or flavours) in a container 40, are added via a second inlet 42 and pre-mixed in the pre-mixer 34.

Mixer 30 mixes the curd received from the conveyor 16 and the cream-additives received from pre-mixer 34, and discharges the mixture via a pump 44 to the final packaging station 46 for packaging the produced cottage cheese. Both pre-mixer 34 and mixing drum 30 are preferably double-jacketed with water cooling coils inbetween.

For purposes of example, pump 4 may be a rotary pump; pumps 26a-26c may be centrifigal pumps; pump 32 may be a peristaltic pump; pump 44 may be a diaphragm pump; and transfer device 14 may be a paddle-wheel type transfer device divided into four compartments so as to gently transfer the curd from strainer 8 to the inlet end 16a of the conveyor 16. The present systems generally attain a ratio of water:curd within the range of 4-10:1; but the above described system and method enable a ratio of 2:1 to be attained.

In this described system, the original hot curb mixture with whey at a temperature of about 54°C is processed into cottage cheese having a final temperature of 5°C or lower in less than 4 minutes, which not only substantially increases the rate of production of the cottage cheese but also imparts to it a longer shelf life.

While the invention has been described with respect to one preferred embodiment, it will be appreciated that this is set forth for purposes of example only, and that many of the described features can be used in other systems for producing cottage cheese or other cheeses; e.g., the straining technique may also be used in producing cheddar cheese. Many other variations, modifications and applications of the invention will be apparent.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A method of processing a hot mixture of cured curd and whey to produce in a continuous manner cottage cheese by separating the curd from the hot mixture, washing and cooling the separated curd, and applying cream to the washed and cooled curd;

   characterized in that the curd, after having been separated from the hot mixture, is washed and cooled by:

   transferring the separated curd to the inlet end of a fine-mesh conveyor; and

   applying chilled water to the curd on the fine-mesh conveyor, which water drains therethrough while washing and cooling the curd as it moves along the fine-mesh conveyor from said inlet end to the outlet end thereof.

2. The method according to Claim 1, wherein said drained water is recycled in its drained form to the fine-mesh conveyor a plurality of times in a counter-current manner with respect to the direction of movement of the curd over the fine-mesh conveyor, such that the purest drained water is applied closest to said outlet end of the fine-mesh conveyor.

3. The method according to Claim 2, wherein said curd is separated from the hot mixture by applying the hot mixture to the upper end of a vertically-extending strainer, and permitting the hot mixture to move downwardly of the strainer by gravity while the whey passes through the strainer.

4. The method according to Claim 3, wherein said strainer is a fine-mesh web mounted with one end receiving the hot mixture at a higher elevation than the opposite end from which the separated curd exits.

5. The method according to Claim 4, wherein said fine-mesh web is of stainless steel and is mounted such that it assumes a parabolic curvature.

6. The method according to Claim 1, wherein the cream is applied to the washed and cooled curd by pre-mixing the cream with a selected additive, applying the pre-mixed cream to the washed and cooled curd exiting from the fine-mesh conveyor, and mixing the curd with the pre-mixed cream.

7. The method according to Claim 6, wherein the weight of the washed and cooled curd is continuously measured as it exits from the fine-mesh conveyor, and the pre-mixed cream is pumped to the curd by a pump continuously controlled in accordance with the measured weight of the curd to maintain a preselected ratio by weight of curd and cream.

FIG 1

FIG 2

FIG 3

European
Patent Office

Application Number

**EP 91 10 4425**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 827 257   (ALPMA ALPENLAND-MASCHINENBAU HAIN & CO. KG)<br>* claims 1,2; figure 1 *<br>— — — | 1 | A 23 C 19/024<br>A 23 C 19/02<br>A 23 C 19/05<br>A 23 C 19/06 |
| X | US-A-3 904 779   (H. HINDS)<br>* abstract; claims 1-9 *<br>— — — | 1 | |
| A | GB-A-2 053 650   (R. GUIDO)<br>* claims 1-6 *<br>— — — — — | 1 | |

| TECHNICAL FIELDS SEARCHED (Int. Cl.5) |
|---|
| A 23 C 19/00 |

The present search report has been drawn up for all claims

| Place of search | Date of completion of search | Examiner |
|---|---|---|
| Berlin | 26 June 91 | SCHULTZE D |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document